# EUROPEAN PATENT APPLICATION

(11) **EP 3 796 109 A1**
(43) Date of publication of application: **24.03.2021**
(21) Application number: 19198096.0
(22) Date of filing: 18.09.2019
(51) Int. Cl.: G05B 13/04, G05B 23/02

(54) **SYSTEM, APPARATUS AND METHOD FOR PREDICTING ATTRIBUTES OF AN ASSET**

(71) Applicant: Siemens Aktiengesellschaft, 80333 München (DE)
(72) Inventor: NAIR, Sudev, 560078 Bangalore, Karnataka (IN); B R, Chethan Ravi, 577134 Chickmagalur, Karnataka (IN); KARKADA SURESH, Suhas, 560085 Girinagara, Bengaluru (IN)
(74) Representative: Isarpatent

(57) **Abstract**

A system (100), an apparatus and a computer-implemented method for predicting attributes of an asset (105) is disclosed. The method comprises configuring a virtual replica of an asset (105) based on asset data associated with the asset (105). The asset data is selected from a group comprising of design data, engineering data, simulation data, test data, condition data, operational data and maintenance data associated with the asset (105) and other assets (140) belonging to the same family of the asset (105). Further, a simulation instance of the asset is generated using a simulation model of the asset (105) based on the virtual replica. Further, the simulation instance of the asset (105) is executed in a simulation environment. Further, simulation results associated with the execution of the simulation instance of the asset (105) are analyzed. Based on the analysis of the simulation results, an attribute of the asset (105) during run-time is predicted.

## Description

The present invention relates to a field of asset management, and more particularly relates to predicting attributes of an asset during a pre-production phase.

Industrial facilities employ numerous assets for performing different operations. The assets may include mechanical systems, electromechanical systems, electronic systems and so on. Each of the assets may have different attributes such as availability, performance, behaviour, efficiency, maintainability, reliability, serviceability and so on. The attributes of each of the assets in a facility may inturn affect an Overall Equipment Effectiveness (OEE) of the facility.

In existing art, the factors affecting the attributes of an asset are determined after the asset is deployed for operation, that is, during a post-production phase of the asset. In one example, a condition of the asset may be periodically monitored in order to determine values of different attributes. Based on monitoring of the condition, the asset may be taken down for preventive maintenance. In another example, a customer may send the asset back to a seller or an Original Equipment Manufacturer (OEM) of the asset, if certain expectations associated with the attribute are not met. This may lead to productivity losses. Currently known technologies do not support accurate determination of attributes of an asset during the pre-production phase.

In light of the above, there exists a need to predict the attributes of an asset before the asset is deployed in a field of operation.

Therefore, it is an object of the present invention to provide a system, an apparatus and a method for predicting attributes of an asset.

The object of the present invention is achieved by a method for predicting the attributes of an asset as disclosed herein. The term 'attribute' as used herein may refer to any characteristic of the asset resulting from a design of the asset. Non-limiting examples of attributes include availability, quality, performance, behaviour, useability, efficiency, maintainability, reliability and serviceability. Non-limiting examples of assets include any machinery or equipment such as motor, gear, bearing, shaft, switchgear, rotor, circuit breaker, protection devices, remote terminal units, transformers, reactors, disconnectors, gear-drive, gradient coils, magnet, radio frequency coils, Programmable Logic Control (PLC) systems, Computerised Numerical Control based systems (such as Sinumerik), turbines, large drives, medical equipment etc. The asset may be part of a complex industrial set-up with a plurality of assets such as a power plant, wind farm, power grid, manufacturing facility, process plants and so on.

The method includes configuring a virtual replica of an asset based on asset data associated with the asset. The virtual replica is a virtual model of the asset. In other words, the virtual replica is a virtual representation of the asset that represents a state of the asset for different operating conditions. In one implementation, the virtual model may be a dynamic virtual model based on one or more of Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, simulation models, machine learning models, Artificial Intelligence models, deep learning models, system models, knowledge graphs and so on. The asset data is selected from a group comprising design data, engineering data, simulation data, test data, condition data, operational data and maintenance data associated with the asset and one or more other assets belonging to the same family of the asset. The one or more other assets belonging to the same family of the asset may include, for example, assets having similar ratings and design specifications and manufactured by the same OEM. The design data may include data associated with a design, for example, geometrical design data of the asset or the one or more other assets. The engineering data may include characteristic values of parameters such as magnetisation, thermal conductivity, electrical resistance and so on associated with different components of the asset or the one or more other assets. The simulation data may include data obtained through simulation of models, say mathematical models or system models, associated with the asset or the one or more other assets. The test data may include data obtained by conducting tests on the asset or a prototype of the asset. The condition data may include data associated with a working condition of the one or more other assets, for example, vibration levels, radiation levels, heat generation, energy consumption and so on. The operational data may include data associated with operating conditions of the one or more other assets and a behaviour of the one or more other assets under the operating conditions. The maintenance data may include data associated with maintenance of the one or more other assets. For example, the maintenance data may include information related to the maintenance activities performed on the one or more other assets, a time duration between the maintenance activities, down-times, failures or abnormalities that occur in the one or more other assets and so on. The asset data may be real-time data, pre-recorded or historic data or a combination thereof. In one example, the asset data may be received from one or more sensing units attached to the asset. In another example, the asset data is received from an electronic device. In yet another example, the asset data is obtained from a database that stores asset data associated with the asset or the one or more other assets similar to the asset.

Advantageously, the method facilitates configuring the virtual replica based on the asset data received from a prototype of the asset or other assets belonging to the same family of the asset. As a result, the number of tests required to be performed on the asset is eliminated or drastically reduced, as compared to existing art.

The method further includes generating a simulation instance of the asset using a simulation model of the asset based on the virtual replica of the asset. The simulation model may be for example, an analytical model in machine-executable form derived from the virtual replica. In one example, the simulation model is configured to model operating characteristics of the asset. The simulation instance may refer to a thread of simulation independent of all other threads during execution and may indicate inputs to the asset, operating conditions of the asset and so on.

The method further includes executing the simulation instance of the asset in a simulation environment to generate simulation results. The simulation instance may be executed in the simulation environment as stochastic simulations, deterministic simulations, dynamic simulations, continuous simulations, discrete simulations, local simulations, distributed simulations and so on.

The method further includes analyzing the simulation results associated with the execution of the simulation instance of the asset. The simulation results are analysed to determine one or more values that enable prediction of attributes associated with the asset. The analysis may be performed based on descriptive techniques, exploratory techniques, inferential techniques, predictive techniques, causal techniques, quantitative analysis techniques, quantitative analysis techniques and so on. In one implementation, the simulation results may be analysed to predict failure instances associated with the asset. The term 'failure instance' may refer to an instant of time at which the asset is predicted to fail. Similarly, parameters such as an unplanned downtime of the asset, an Ideal Operating Time (IOT) of the asset, a Lost Operating Time (LOT) of the asset, a Net Operating Time (NOT) of the asset and a Net Available Time (NAT) of the asset may also be predicted by analysing the simulation results. In another implementation, the simulation results may be analysed to determine critical components associated with the asset. For example, the critical components may refer to components of the asset that may lead to a first failure of the asset. In yet another implementation, the simulation results may be analysed to determine operating parameters of the asset when the asset is deployed in a field of operation.

The method further includes predicting an attribute of the asset during run-time based on the analysis of the simulation results. More specifically, the attribute is predicted based on the parameters determined during analysis of the simulation results. The attribute is determined during a pre-production phase of the asset, that is before deploying the asset in a field of operation. In a preferred embodiment, the attribute is calculated using one or more probablistic models. The probablistic models may introduce a certain degree of randomness to one or more variables associated with a system model of the asset. In one example, the probablistic models of one or more subsystems associated with the system model may be based on degradation or ageing distributions of different components of the asset. Further, a probablistic value of the attribute may be predicted by performing stochastic simulations based on the system model. For example, Monte Carlo simulations based on the probablistic models may be used for predicting probablistic values of the attribute. The probablistic values of the attribute may include probability distributions rather than a single value of the attribute. In another embodiment, the attribute may be calculated based on deterministic models. For example, the deterministic models may be based on hypothetical what-if scenarios, wherein one or more variables associated with a system model of the asset are assigned definite values in order to predict a single value of the attribute.

Advantageously, the present invention enables prediction of the attribute of the asset before the asset is deployed in the field of operation, as opposed to conventional techniques involving periodic condition monitoring of the asset after the asset is deployed in the field of operation. Further, the attribute of the asset may be predicted for any instance of time during a lifecycle of the asset. For example, the availability of the asset after 360 days of operation may be predicted.

In one embodiment, predicting the attribute of the asset includes computing an availability of the asset based on the analysis of the simulation results, and determining whether the availability of the asset is greater than or equal to a threshold availability of the one or more other assets in the same family of the asset. The threshold availability may be defined as a minimum availability value of the asset below which the asset is deemed to be unfit for operation. In other words, the threshold availability may be defined as a minimum uptime of the asset with respect to a planned production time for the asset upon being fielded for operation. For example, if the threshold availability is 70% and the asset is predicted to have an availability of 65%, then the asset is deemed unfit for operation. Otherwise, if the availability of the asset is greater than the threshold availability, the asset is deemed suitable for operation.

In another embodiment, predicting the attribute of the asset includes determining a behaviour of the asset during run-time based on the analysis of the simulation results and determining whether the behaviour of the asset conforms to an expected behaviour of the one or more other assets in the same family of the asset. The behaviour of the asset may be determined in terms of behavioural indicators such as noise levels, vibration levels, pressure levels, smoke or pollution levels, temperature levels, radiation levels, current consumption, production time and so on associated with the asset. The expected behaviour of the asset may be based on predefined maximum or minimum allowable values for the behavioural indicators. In order to determine whether the behaviour of the asset conforms to the expected behaviour, the values of the behavioural indicators are compared with the expected behaviour of the asset. The behaviour of the asset may be determined based on behaviour of individual components of the asset or based on an emergent behaviour of all the components in the asset. For example, if the asset is predicted to have a noise level of 65 decibels and the expected behaviour of the asset is a maximum allowable noise level of 85 decibels, then the behaviour of the asset conforms to the expected behaviour of the asset.

In yet another embodiment, predicting the attribute of the asset includes determining a performance of the asset based on the analysis of the simulation results and determining whether the performance of the asset meets a predefined performance rating. The performance of the asset may be determined in terms of one or more performance indicators. The performance indicators may be associated with operational efficiency, Overall Equipment Effectiveness, operating costs, and so on associated with the asset. For example, the operational efficiency may be determined as percentage output of speed, torque, load current, voltage, power and so on, with respect to a rated output. The value of the performance indicator is further compared to the predefined performance ratings for the asset. If the value of the performance indicator is less than the predefined performance rating then the asset may be deemed unfit for operation.

In yet another embodiment, predicting the attribute of the asset includes predicting a probability of failure of the asset during run-time based on the analysis of the simulation results. The probability of failure of the asset at a given instant 't' may refer to a probability that the asset may fail given that the asset has survived until the instant 't'. For example, the probability of failure may be determined by calculating the number of failures observed from the simulation results for a time period 0 to t seconds. In another example, the probability of failure of the asset may be calculated using an exponential function, such as a Bathtub curve, based on a Mean Time Between Failures determined from the simulation results. Similarly, the probability of failure may be calculated based on any known failure probability functions known in the art, based on the failures observed from the simulation results. In a preferred embodiment, failure events associated with the asset are predicted using probablistic availability models, not just only based on MTBF. It must be understood that the failures observed from the simulation results may be associated with failure of the asset or failure of one or more components of the asset. In addition to the probability of failure of the asset, a time of occurrence of the failure, the one or more components associated with the failure and so on may also be identified.

Advantageously, the present invention enables an OEM to provide the attribute as a service to a customer. For example, if the attribute is availability, then the OEM may charge the customer for the asset based on the predicted availability of the asset, as opposed to existing art where the asset is sold to the customer at a fixed price without considering the availability. Further, the OEM may also determine guarantee and warranty periods for the asset based on the predicted attributes. In addition, prediction of the attributes also helps in planning a down-time for the facility wherein the asset is installed. For example, the down-time may be planned based on a predicted availability of the asset.

The method further comprises determining a root cause affecting the attribute of the asset. The root cause may be defined as any factor that prevents the attribute from attaining a recommended predefined range or value of the attribute and may be associated with cascading failures, design failures, defects, resistance to change, quality control and so on. The root cause may be determined by using any known root cause analysis technique. For example, the root cause analysis technique may employ root cause analysis models such as Neural Networks, Bayesian network classifiers, Support Vector Machines (SVMs) and so on, for inferring the root cause based on data obtained from the simulation results. Further, a design parameter affecting the attribute is identified based on the root cause. For example, the design parameter may be associated with material, material form, shape, dimension or orientation of one or more components of the asset. Further, a design of the asset is generated based on the design parameter identified. The design of the asset may be based on a modified value of the design parameter such that the modified value of the design parameter results in improving the attribute of the asset. In one example, the material, material form, shape, dimension or orientation of the one or more components of the asset may be modified in order to reduce wear and tear of the component in order to increase an availability of the asset.

The method further includes monitoring a condition of the asset during run-time using the virtual replica. The condition of the asset may be monitored using one or more sensing units deployed on or near the asset when the asset is deployed in the field of operation. For example, the sensing units may measure condition data associated with the asset when the asset is deployed in the field of operation. Further, abnormalities in the asset are identified based on the monitoring of the condition. More specifically, the condition data is further provided to the virtual replica of the asset in order to simulate abnormalities in the asset. Further, a design of the asset is refined based on the abnormalities identified. For example, refining of the design may involve modification of the design parameters associated with the design of the asset, such that the modified design parameters result in mitigation or elimination of the abnormalities. The refined design of the asset may be further used to improve design of other assets in pre-production phase. In one implementation, the improved design is further communicated to a designer of the asset as recommendations in order to implement the design in newly manufactured assets. For example, the improved design may be provided to a Design for Manufacturability (DFM) software. The DFM software may further generate one or more designs for facilitating the manufacturing of the asset or a component of the asset. In another example, the improved design may be directly communicated to an additive manufacturing device upon performing predefined design rule checks. For example, one design rule check may include checking whether the geometric tolerances in the design are within predefined limits.

Advantageously, the present invention helps in improving attributes of assets with each consecutively manufactured asset, by generating designs for alleviating the root cause affecting the attribute or by refining designs based on abnormalities identified using the virtual replica.

The method further comprises generating a notification indicating the attribute of the asset, on a Graphical User Interface. The Graphical User Interface may be associated with electronic devices, including but not limited to, personal computers, workstations, mobile phones and personal digital assistants. The notification may be in the form of two-dimensional displays, Augmented Reality, Virtual Reality or Mixed Reality. In one example, the notification may be generated in the form of pop-up display on the Graphical User Interface. In addition to indicating the attribute of the asset, the notification may also include one or more recommendations or suggestions for improving the attribute. In one implementation, the notification may also include one or more designs corresponding to the improved attribute. For example, the designs corresponding to the improved attribute may be overlaid on an existing design of the asset. In another example, the designs may be displayed separately along with respective values of the improved attribute. In another implementation, the recommendations may be associated with managing spares for the asset. For example, the recommendations may include a replacement time of a component of the asset, a recommended source for procuring the spare for the asset or the component and so on.

Advantageously, the present invention helps in efficiently managing spares for an asset based on the predicted attributes of the asset.

The object of the present invention is achieved by an apparatus comprising one or more processing units, and a memory unit communicatively coupled to the one or more processing units. The memory unit comprises one or modules stored in the form of machine-readable instructions executable by the one or more processing units. The one or more modules are configured to perform method steps described above. The execution of the one or more modules may also be performed using co-processors such as Graphical Processing Unit (GPU), Field Programmable Gate Array (FPGA) or Neural Processing/Compute Engines. In addition, the memory unit may also include a database.

According to an embodiment of the present invention, the apparatus can be an edge computing device. As used herein "edge computing" refers to computing environment that is capable of being performed on an edge device (e.g., connected to the sensors unit in an industrial setup and one end and to a remote server(s) such as for computing server(s) or cloud computing server(s) on other end), which may be a compact computing device that has a small form factor and resource constraints in terms of computing power. A network of the edge computing devices can also be used to implement the apparatus. Such a network of edge computing devices is referred to as a fog network.

In another embodiment, the apparatus is a cloud computing system having a cloud computing based platform configured to provide a cloud service for analyzing condition data of the assets. As used herein, "cloud computing" refers to a processing environment comprising configurable computing physical and logical resources, for example, networks, servers, storage, applications, services, etc., and data distributed over the network, for example, the internet. The cloud computing platform may be implemented as a service for analyzing data. In other words, the cloud computing system provides on-demand network access to a shared pool of the configurable computing physical and logical resources. The network is, for example, a wired network, a wireless network, a communication network, or a network formed from any combination of these networks.

Additionally, the object of the present invention is achieved by a system for predicting an attribute of the asset. The system comprises one or more sources capable of providing asset data associated with an asset and an apparatus as described above, communicatively coupled to the one or more sources. The apparatus is configured to predict the attribute of the asset based on the asset data. The one or more sources may include sensing units, electronic devices, edge devices, servers and so on. The sensing units may be used to measure operating parameters associated with one or more other assets in the same family of the asset or a prototype of the asset. The electronic device may include any device capable of sending data across a network. Non-limiting examples of electronic devices include personal computers, laptop computers, personal digital assistant (PDA), tablets and mobile phones. In one example, the electronic device is used by a designer to provide design data associated with the asset. The manufacturing device may include any device that is capable of receiving suggestions or instructions for manufacturing of the asset. In one example, the server may be a database server that stores asset data associated with one or more assets. Further, the apparatus may also be communicatively coupled to one or more manufacturing devices. The manufacturing device may refer to any device that is configured for receiving instructions, suggestions or recommendations for manufacturing the asset.

The object of the present invention is achieved by a computer-program product having machine-readable instructions stored therein, which when executed by a processor, cause the processor to perform a method as describe above.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
- FIG 1A: illustrates a block diagram of a system for predicting an availability of a motor, in accordance with one embodiment of the present invention;
- FIG 1B: illustrates a block diagram of a design module, in accordance with one embodiment of the present invention;
- FIG 1C: illustrates a block diagram of a virtual replica module, in accordance with one embodiment of the present invention;
- FIG 2: shows a flowchart of a method for improving a design of the motor, in accordance with one exemplary embodiment of the present invention;
- FIG 3A: illustrates a GUI representing an availability model of the motor, in accordance with one exemplary embodiment of the present invention;
- FIG 3B: illustrates a GUI representing an availability simulation of the motor using the availability model, in accordance with one exemplary embodiment of the present invention; and

- FIG 4: shows a flowchart of a method for predicting attributes of an asset, in accordance with one embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

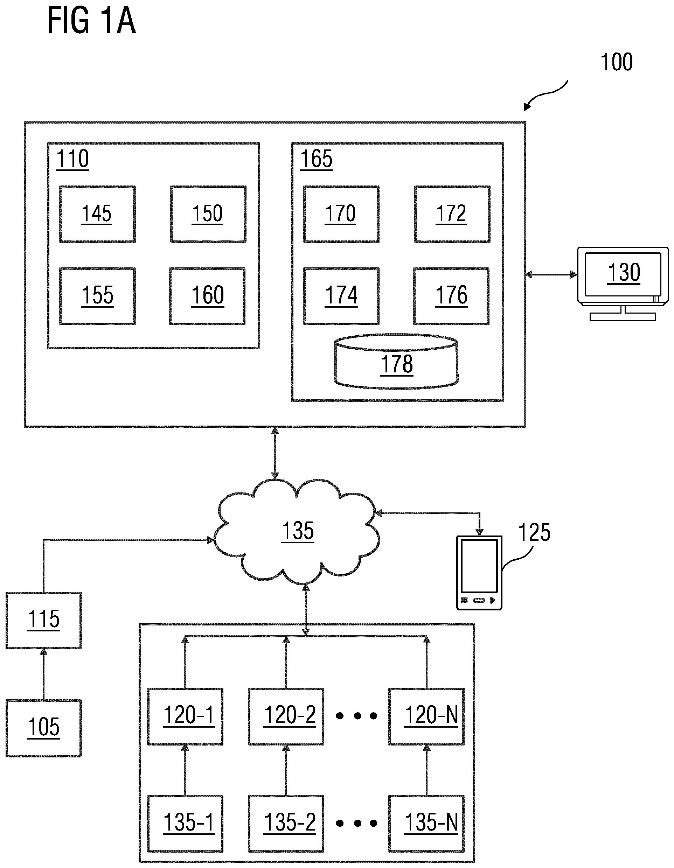

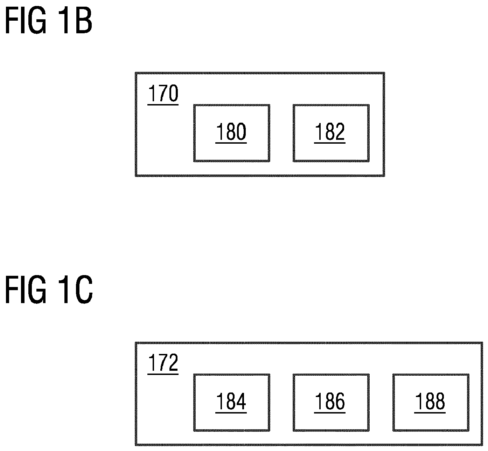

Referring to FIG 1, a system 100 for predicting an availability of a squirrel-cage induction motor 105 (henceforth referred to as 'motor 105') is shown, in accordance with one embodiment of the present disclosure. The system 100 comprises an apparatus 110. The apparatus 110 is communicatively coupled to a first sensing unit 115, a plurality of second sensing units 120-1, 120-2 ... 120-n and an electronic device 125, over a network 135. In addition, the apparatus 110 is communicatively coupled to a manufacturing device 130. In one example, the manufacturing device 130 may be a three-dimensional (3D) printer provided at a manufacturing site of the motor 105. In another example, the manufacturing device 130 may be a Graphical User Interface (GUI) which allows an operator to set instructions for manufacturing the motor 105. In yet another example, the manufacturing device 130 and the electronic device 125 may be the same. The electronic device 125 may be one or more of a personal computer, a personal digital assistant, a tablet, a mobile phone and so on.

The first sensing unit 115 measures one or more parameters associated with the motor 105. The one or more parameters may correspond to a current signature, a voltage signature, a magnetic signature, a vibration signature, a heat signature, and so on, associated with the motor 105. In another implementation, the one or more parameters may be associated with a prototype of the motor 105. The first sensing unit 115 further provides, to the apparatus 110, a first set of data comprising the measured values of the one or more parameters associated with the motor 105. For example, the first set of data may include measured values of rotor current, stator current, shaft vibrations, housing vibrations, voltage, magnetic flux density, torque and so on associated with the motor 105.

The plurality of second sensing units 120-1, 120-2...120-n (henceforth collectively referred as the second sensing unit 120) are associated with a plurality of fielded motors 140-1, 140-2...140-n (henceforth collectively referred as the fielded motor 140) respectively. The second sensing unit 120 may be similar to the first sensing unit 115. The fielded motor 140 may refer to another motor belonging to a family of the motor 105, that is already deployed for operation in a field of operation. For example, if the motor 105 is an induction motor having a rating of 1kW manufactured by an OEM, the fielded motor 140 may be another induction motor having a rating of 1 kW manufactured by the same OEM. The second sensing unit 120 provides a second set of data associated with the fielded motor 140. The second set of data may include operational data, maintenance data and condition data associated with the fielded motor 140.

The electronic device 125 is configured to provide a third set of data. The third set of data may include design data, engineering data, simulation data, maintenance data and condition data associated with at least one of the motor 105 and the fielded motor 140.

The first set of data, the second set of data and the third set of data may be henceforth collectively referred to as asset data. It must be understood that the apparatus 110 may obtain the asset data from any source in addition to the first sensing unit 115, the second sensing unit 120 and the electronic device 125. In another embodiment, the asset data may be obtained from a database, for example, a database implemented using blockchain technology. In another implementation, the database may be stored on a database server. In yet another implementation, the database may be stored in a storage unit of the apparatus 110.

The apparatus 110 may be a (personal) computer, a workstation, a virtual machine running on host hardware, a microcontroller, or an integrated circuit. As an alternative, the apparatus 110 may be a real or a virtual group of computers (the technical term for a real group of computers is "cluster", the technical term for a virtual group of computers is "cloud").

The apparatus 110 includes a communication unit 145, one or more processing units 150, a display 155, a Graphical User Interface (GUI) 160 and a memory 165 communicatively coupled to each other. In one embodiment, the communication unit 145 includes a transmitter (not shown), a receiver (not shown) and Gigabit Ethernet port (not shown). The memory 165 may include 2 Giga byte Random Access Memory (RAM) Package on Package (PoP) stacked and Flash Storage. The one or more processing units 150 are configured to execute the defined computer program instructions in the modules. Further, the one or more processing units 150 are also configured to execute the instructions in the memory 165 simultaneously. The display 155 includes a High-Definition Multimedia Interface (HDMI) display and a cooling fan (not shown). Additionally, control personnel may access the apparatus 105 through the GUI 160. The GUI 160 may include a web-based interface, a web-based downloadable application interface, and so on.

The processing unit 150, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 150 may also include embedded controllers, such as generic or programmable logic devices or arrays, application specific integrated circuits, single-chip computers, and the like. In general, a processing unit 150 may comprise hardware elements and software elements. The processing unit 150 can be configured for multithreading, i.e. the processing unit 150 may host different calculation processes at the same time, executing the either in parallel or switching between active and passive calculation processes.

The memory 165 may be volatile memory and non-volatile memory. The memory 165 may be coupled for communication with the processing unit 150. The processing unit 150 may execute instructions and/or code stored in the memory 165. A variety of computer-readable storage media may be stored in and accessed from the memory 165. The memory 165 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 165 includes a design module 170, a virtual replica module 172, a simulation module 174, a prediction module 176 and a database 178 in the form of machine-readable instructions on any of the above-mentioned storage media and may be in communication to and executed by processing unit 150. The following description explains functions of the modules when executed by the one or more processing units 150.

The design module 170 comprises a modelling module 180 and an engineering module 182 as shown in FIG 1B. The modelling module 180 may generate one or more models of the motor 105 based on design data received from the electronic device 125. For example, the design data may include a rating of the motor 105, a shape of the motor 105, geometrical dimensions of the motor 105, number of windings on the motor 105, a finish of the motor 105 and so on. Non-limiting examples of the one or more models include Finite-Element (FE) models, 1D models, 2D models, 3D models and so on.

The engineering module 182 may process engineering data to identify parametric distributions associated with the motor 105. In the present embodiment, the engineering data may include magnetisation values, stress values, conductivity values and so on, associated with different parts of the motor 105. Based on the engineering data, the engineering module 182 may determine parametric distributions, for example using Finite Element Analysis (FEA), for different parameters associated with the motor 105. In one example, the parametric distribution may reflect a relationship between stator current and magnetic flux in the motor 105. In another example, the parametric distribution may reflect a relationship between vibrations and airgap asymmetry in the motor 105. The parametric distributions may be in the form of metamodels, stochastic models, parametric models, machine learning models, Artificial Intelligence (AI) based models, neural network models, deep learning models and so on.

The virtual replica module 172 may comprise a generation module 184, a calibration module 186 and a configuration module 188 as shown in FIG 1C. The generation module 184 generates a virtual replica of the motor 105 based on the one or more models and the parametric distributions obtained from the design module 170.

The calibration module 186 calibrates the virtual replica of the motor 105 to replicate substantially similar responses of the motor 105 for any given operating condition. In other words, the virtual replica is calibrated to ensure a certain degree of fidelity with the motor 105. In one implementation, the virtual replica is calibrated using machine learning techniques including but not limited to, supervised learning techniques, unsupervised learning techniques and reinforcement learning techniques. The machine learning techniques may use stochastic simulations based on the virtual replica and the operational data obtained from the motor 105 for calibrating the virtual replica. For example, the virtual replica may be calibrated using Bayesian calibration technique. Upon calibrating, a response of the virtual replica, say at time t = 10 seconds, may represent the response of the motor 105 at time t = 10 seconds under the same operating conditions. In another implementation, the virtual replica is calibrated using Artificial Intelligence (AI) based techniques. For example, the AI based technique may involve deep learning.

The configuration module 188 configures the virtual replica, for an operating condition, using asset data associated with the motor 105. The asset data is selected from among the design data, the engineering data, the simulation data, the test data, the condition data, the operational data and the maintenance data associated with the motor 105 and the fielded motor 140.

The simulation module 174 generates a simulation instance of the motor 105 using a simulation model of the motor 105. The simulation instance represents a state of operation of the motor 105 in the field of operation, that is during run-time. The simulation model is based on the virtual replica of the motor 105. Further, the simulation module 174 executes the simulation instance of the motor 105 in a simulation environment for emulating a behaviour of the motor 105 in a field.

The prediction module 176 analyses simulation results associated with the execution of the simulation instance of the motor 105 in the simulation environment. Further, the prediction module 176 predicts an availability of the motor 105 during run-time based on the analysis of the simulation results. Further, the prediction module 176 may also compare the predicted value of availability to a predefined threshold value of attribute associated with the motor 105. If the predicted value of attribute is less than the predefined threshold value of availability, the design module 170 may modify the design parameters of the one or more models, for improving the availability of the motor 105 during run-time.

Those of ordinary skilled in the art will appreciate that the hardware depicted in FIG 1A may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

A system in accordance with an embodiment of the present disclosure includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a desired response.

One of various commercial operating systems, such as a version of Microsoft Windows™ may be employed if suitably modified. The operating system is modified or created in accordance with the present disclosure as described.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

Disclosed embodiments provide systems and methods for predicting attributes of an asset.

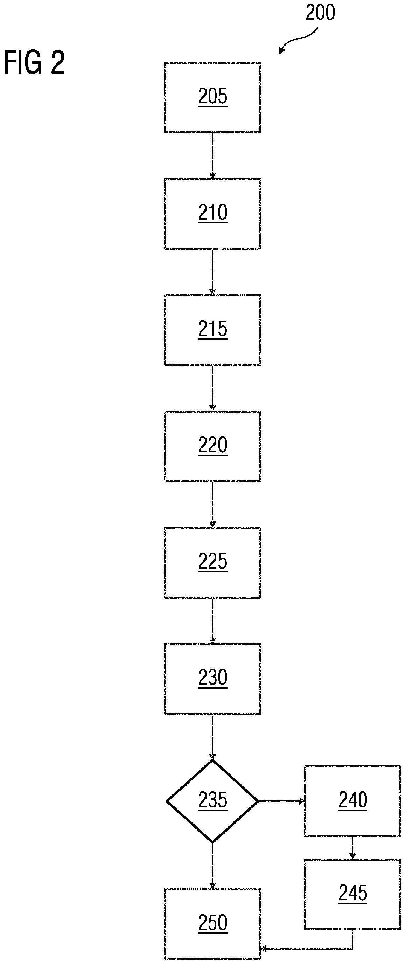

Referring to FIG 2, in conjunction with FIG 1A, a method 200 for improving design of the motor 105 based on a predicted availability of the motor 105 is shown, in accordance with one exemplary embodiment of the present disclosure. The method 200 may be implemented on the apparatus 110. The method comprises steps 205-250.

At step 205, one or more simulation models based on the virtual replica of the motor 105 are calibrated. The one or more simulation models may correspond to one or more components of the motor 105. For example, the one or more components of the motor 105 may include a rotor, a bearing, a stator, a rotor shaft and so on. The one or more simulation models may include, but is not limited to, fine-element models, current simulation models, magnetic flux simulation models, heat transfer simulation models, computational fluid dynamics (CFD) simulation models, and structural simulation models.

The calibration of the simulation model may be based on mechanical loads, electrical loads, process loads and so on. For example, the simulation model may be calibrated for mechanical loads by firstly applying one or more mechanical loads to the motor 105. The mechanical loads may be applied to the motor 105 by introducing misalignments, unbalances, bent shafts, belt loads and so on. Upon applying the mechanical load, test data corresponding to the mechanical load is obtained from the first sensing unit 115. Further, simulation data corresponding to similar conditions of mechanical load is obtained using the simulation model. Similarly, test data and simulation data may be obtained for electrical loads, process loads and so on. The electrical loads may be applied to the motor 105 by, for example, introducing overload conditions and underload conditions. The process load conditions may be applied to the motor 105 by using process loading devices such as gearboxes, actuators and so on. Further, Bayesian calibration technique is employed to calibrate the virtual replica based on the test-data received from the first sensing unit 115 and the simulation data obtained from the simulation model. In other words, parameters associated with the simulation model are tuned in order to improve accuracy of the simulation data with respect to the test data. In one implementation, the test data and the simulation data may correspond to external responses of the motor 105. Further, the virtual replica is calibrated for internal responses of the motor 105 by applying a correction factor to simulation data corresponding to the internal reponses, based on the calibrated external responses. In addition to the above, calibration of the virtual replica may also consider variabilities associated with manufacturing of the motor 105, based on data available from the fielded motor 140.

At step 210, a virtual replica of the motor 105 is configured based on asset data associated with the motor 105. In the present example, the asset data may include test data received from the first sensing unit 115, operational data, condition data and maintenance data associated with the fielded motor 140, design data and engineering data obtained from the electronic device 125, and so on. The asset data is used to configure the virtual replica for simulating a behaviour of the motor 105 during run-time for a given operating condition. In the present example, the virtual replica is configured for operating conditions corresponding to a failure scenario of the motor 105. For example, the failure scenario may include a high electrical load, say 1.2 kW, exceeding the electrical load rating of 1 kW of the motor 105.

At step 215, a simulation instance of the motor 105 is generated using the one or more simulation models.

At step 220, the simulation instance of the motor 105 is executed in a simulation environment and simulation results are generated. For example, the simulation results may indicate a behaviour of the motor 105 until a first failure of the motor 105 occurs and a behaviour of the motor 105 after the failure occurs.

At step 225, the simulation results are analysed. In the present embodiment, the simulation results may be analysed to determine a failure instance associated with the motor 105. For example, the failure instance may indicate a failure of the motor 105 after 60 days of operation under the overload conditions. Similarly, a Mean Time Between Failures (MTBF) of the asset may also be determined based on time between two or more failure instances associated with the motor 105. The simulation results are further analysed to determine a critical component associated with the failure instance. For example, the critical component may be a stator winding of the motor 105. In a preferred embodiment, further detailed virtual tests may be performed on a virtual replica of the critical component for ensuring that the confidence levels of the failure instances determined from the simulation results is above a predefined confidence level, say 95%. The virtual tests may be based on a degradation model of the critical component such as, but not limited to, Weibull's distribution, lognormal distribution, Poisson's distribution, Bayesian-Weibull distribution or a combination thereof. In a preferred embodiment, the degradation model may be based on cumulative damage-Weibull's distribution and may be used to determine a cumulative damage to the motor 105 from failure of the critical component.

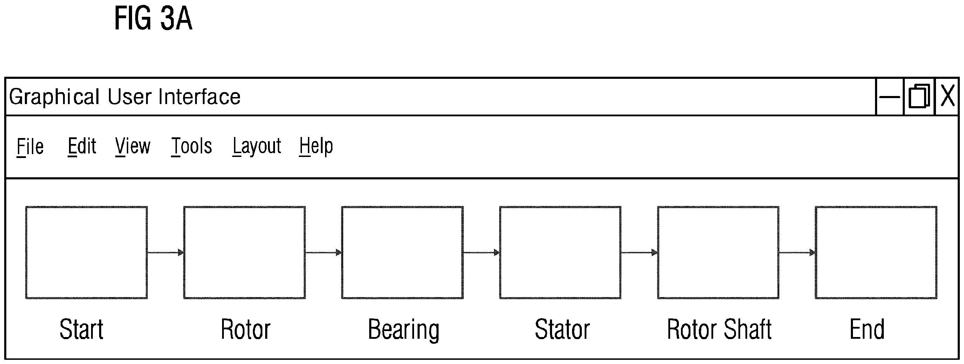

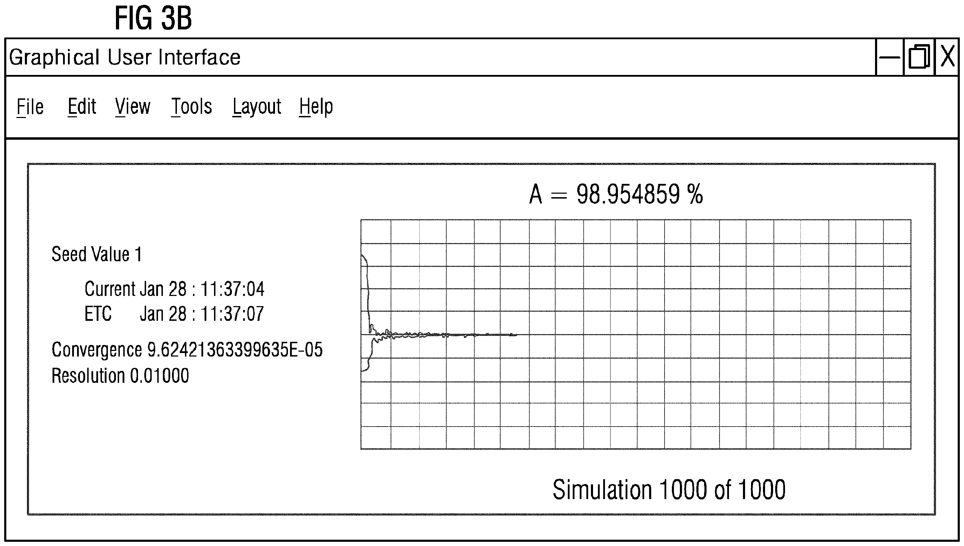

At step 230, the availability or an uptime of the motor 105 is predicted using the failure instances determined in step 225. More specifically, the availability of the motor 105 is predicted using an availability model of the motor 105 as shown in FIG 3A. The availability model may be built based on the test data associated with the motor 105 and the simulation data obtained from the calibrated simulation models of the motor 105. In the present example, the availability model comprises blocks corresponding to one or more components of the motor 105, such as the rotor, the bearing, the stator and the rotor shaft. The blocks are arranged in series, based on an impact of failure of one component on another component. It must be understood that the blocks may be connected in series configuration, parallel configuration or in series-parallel configuration based on the impact of failure of one component on another component. More specifically, a failure of the rotor leads to a failure of the bearing (drive-end bearing or non-drive end bearing), the failure of the bearing leads to a failure of the stator, the failure of the stator leads to a failure of the rotor shaft and so on. Each block in the availability model may be configured based on functional distributions specific to the one or more components corresponding to the block. In one example, the functional distributions may include one or more life distributions, such as Weibull's distribution, Poisson's distribution, lognormal distribution and so on, associated with the one or more components. In another example, the functional distributions may also be associated with a maintainability of the one or more components. In yet another example, the functional distribution may include both life distributions and maintainability-based distribution. Further, each of the blocks are also associated with an attribute percentage. In the present example, the attribute percentage is an availability percentage associated with the one or more components corresponding to the block. The availability models are executed in a simulation environment to determine the availability through a stochastic approach. The availability is determined for a specific instance or period of time during a life of the asset. For example, the availability is determined as 98.954% by executing the availability model of FIG 3A using Monte-Carlo simulations as shown in FIG 3B. It must be understood that the predicted availability is a probablistic value, as the availability model is a probablistic availability model configured based on functional distributions, and not only based on the failure instances or the MTBF determined from the failure instances.

At step 235, the availability of the motor 105 is compared with a predefined value of availability for a family of the motor 105. For example, the availability may be compared with a threshold value of availability predefined for the motor 105 or the fielded motor 140. If the value of availability is lesser than the threshold value, then steps 240 and 245 are performed. Otherwise, step 250 is performed.

At step 240, a design parameter affecting the availability is identified. For example, the design parameter may be a size of stator slots provided in the motor 105.

At step 245, an updated value of the design parameter is calculated such that the updated value of the design parameter improves the availability of the asset. In one embodiment, the updated value of the design parameter may be fed to an additive manufacturing device 130 in order to manufacture new parts for the motor 105 or another motor similar to motor 105 based on the updated value of the design parameter. In another further embodiment, the updated value of the design parameter may be stored in the database 178, for example a blockchain database, for accessing by the electronic device 125 associated with designers or the manufacturing device 130.

At step 250, a notification may be generated indicating one or more of the predicted availability of the motor 105, the design parameter affecting the availability of the motor 105, the updated value of the design parameter and a corresponding improved availability. In a preferred embodiment, the apparatus 110 may generate a plurality of recommendations. Each of the recommendations may comprise a combination of updated values of one or more design parameters associated with the motor 105, in order to improve one or more attributes of the motor. In another embodiment, the apparatus 110 may generate an optimised set of values for the design parameters based on predefined conditions. For example, one of the predefined conditions may include an availability greater than 95% and an operating efficiency between 80-90%. The apparatus 110 may also provide recommendations for managing spare parts for the motor 105 based on the attributes predicted. For example, if the critical component of the motor 105 is identified as a bearing, then the recommendations may include replacement of the bearing every 30 days.

In another embodiment, the virtual replica of the motor 105 may be used to predict an attribute of the motor 105 in terms of a behaviour of the motor 105. The behaviour of the motor 105 may be determined in terms of an energy consumed by the motor 105. If the energy consumed by the motor 105 exceeds a predefined upper limit, then the apparatus 110 may modify a design parameter associated with the motor 105 in order to ensure that the energy consumed by the motor 105 during run-time is less than the predefined upper limit. For example, the design of a ventilation arrangement of the motor 105 may be improved in order to increase an energy efficiency of the motor 105.

In yet another embodiment, the virtual replica of the motor 105 may be used to predict a performance of the motor 105. For example, the performance of the motor 105 may be determined based on an output torque or power. If the performance of the motor 105 does not meet a predefined rating, then the apparatus 110 may modify a design parameter in order to improve the performance of the motor 105. For example, operating efficiency of the motor 105 may be improved by increasing the thickness of wires used and by using thinner laminations.

In yet another embodiment, the virtual replica of the motor 105 may be used to predict an impact of the motor 105 on a facility where the motor 105 may be installed. For example, the impact may be determined based on the probablistic value of availability of the motor 105 (as determined in step 230) on a probablistic Overall Equipment Effectiveness (OEE) of the facility. In a further embodiment, the apparatus 110 may use the virtual replica of the motor 105 to monitor an operation of the motor 105 upon being fielded. Based on the monitoring, the apparatus 110 may identify abnormalities in the operation of the motor 105. The apparatus 110 may further improve a design of the motor 105 based on the abnormalities identified such that the improved design eliminates or reduces the occurrence of abnormalities in the motor 105. The improved design may be further used for manufacturing of other motors in the same family of the motor 105. In one implementation, the improved design may be communicated to the manufacturing device 130 or the electronic device 125 as a notification or the design may be automatically updated for manufacturing of the other motors.

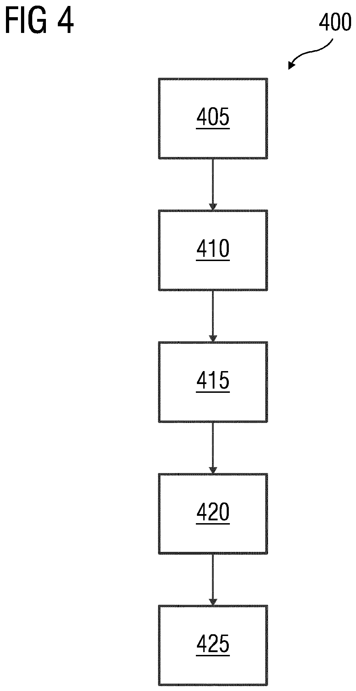

Referring to FIG 4, a method 400 for predicting attributes of an asset is described. The method 400 may be implemented on the apparatus 110. The method comprises steps 405-425.

At step 405, a virtual replica of the asset is configured based on asset data associated with the asset. The asset data is selected from a group comprising of design data, engineering data, simulation data, test data, condition data, operational data and maintenance data associated with the asset and other assets belonging to the same family of the asset.

At step 410, a simulation instance of the asset is generated using a simulation model of the asset based on the virtual replica of the asset.

At step 415, the simulation instance of the asset is executed in a simulation environment.

At step 420, simulation results associated with the execution of the simulation instance of the asset are analyzed.

At step 425, an attribute of the asset during run-time is predicted based on the analysis of the simulation results.

The present invention may take the form of a computer program product comprising program modules accessible from computer-usable or computer-readable medium storing program code for use by or in connection with one or more computers, processors, or instruction execution system. For the purpose of this description, a computer-usable or computer-readable medium is any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology may be centralized or distributed (or a combination thereof) as known to those skilled in the art.

While the invention has been illustrated and described in detail with the help of a preferred embodiment, the invention is not limited to the disclosed examples. Other variations can be deducted by those skilled in the art without leaving the scope of protection of the claimed invention.

### Further Embodiments

1. A computer-implemented method comprising:
   configuring a virtual replica of an asset (105) based on asset data associated with the asset (105), wherein the asset data is selected from a group comprising of design data, engineering data, simulation data, test data, condition data, operational data and maintenance data associated with the asset (105) and one or more other assets (140) belonging to the same family of the asset;
   generating a simulation instance of the asset using a simulation model of the asset (105) based on the virtual replica of the asset (105);
   executing the simulation instance of the asset (105) in a simulation environment to generate simulation results;
   analyzing the simulation results associated with the execution of the simulation instance of the asset (105); and
   predicting an attribute of the asset (105) during run-time based on the analysis of the simulation results.
2. The method according to embodiment 1, wherein the virtual replica is a virtual model of the asset (105).
3. The method according to embodiment 1, wherein the asset (105) is in a pre-production phase.
4. The method according to embodiment 1, wherein predicting the attribute of the asset (105) comprises:
   computing an availability of the asset(105) based on the analysis of the simulation results; and
   determining whether the availability of the asset (105) is greater than or equal to a threshold availability of the one or more other assets (140) in the same family of the asset (105).
5. The method according to embodiment 1, wherein predicting the attribute of the asset (105) comprises:
   determining a behaviour of the asset (105) during run-time based on the analysis of the simulation results; and
   determining whether the behaviour of the asset (105) conforms to an expected behaviour of the one or more other assets (140) in the same family of the asset (105) .
6. The method according to embodiment 1, wherein predicting the attribute of the asset(105) comprises:
   determining a performance of the asset (105) based on the analysis of the simulation results; and
   determining whether the performance of the asset (105) meets a predefined performance rating.
7. The method according to embodiment 1, wherein predicting the attribute of the asset (105) comprises:
   predicting a probability of failure of the asset (105) during run-time based on the analysis of the simulation results.
8. The method according to embodiment 1, further comprising:
   determining a root cause affecting the attribute of the asset (105);
   identifying a design parameter affecting the attribute based on the root cause; and
   generating a design of the asset (105) based on identified design parameter.
9. The method according to embodiment 1, further comprising:
   monitoring a condition of the asset (105) during run-time using the virtual replica;
   identifying abnormalities in the asset (105) based on the monitoring of the condition; and
   refining a design of the asset (105) based on the abnormalities identified.
10. The method according to embodiment 1, further comprising:
   determining an impact of the attribute of the asset (105) on a facility wherein the asset (105) is installed.
11. The method according to embodiment 1, further comprising:
   generating a notification indicating the attribute of the asset (105), on a Graphical User Interface (160).
12. An apparatus (110) comprising:
   one or more processing units (150); and
   a memory unit (165) communicatively coupled to the one or more processing units, wherein the memory unit (165) comprises one or more modules stored in the form of machine-readable instructions executable by the one or more processing units (150), wherein the one or more modules are configured to perform method steps according to any of the embodiments 1 to 11.
13. A system (100) comprising:
   one or more sources (115, 120, 125) capable of providing asset data associated with an asset (105); and
   an apparatus (110) according to embodiment 11, communicatively coupled to the one or more sources (115, 120, 125), wherein the apparatus (110) is configured to predict an attribute of the asset (105) based on the asset data, according to any of the method embodiments 1 to 11.
14. A computer-program product having machine-readable instructions stored therein, which when executed by one or more processing units (150), cause the processing units (150) to perform a method according to any of the embodiments 1 to 11.

### List of reference numerals

- 100: system for predicting attributes of a motor
- 105: motor
- 110: apparatus
- 115: first sensing unit
- 120: second sensing unit
- 125: electronic device
- 130: manufacturing device
- 135: network
- 140: fielded motor
- 145: communication unit
- 150: one or more processing units
- 155: display
- 160: Graphical User Interface
- 165: memory
- 170: design module
- 172: virtual replica module
- 174: simulation module
- 176: prediction module
- 178: database
- 180: modelling module
- 182: engineering module
- 184: generation module
- 186: calibration module
- 188: configuration module

## Claims

1. A computer-implemented method comprising:
configuring a virtual replica of an asset (105) based on asset data associated with the asset (105), wherein the asset data is selected from a group comprising of design data, engineering data, simulation data, test data, condition data, operational data and maintenance data associated with the asset (105) and one or more other assets (140) belonging to the same family of the asset;
generating a simulation instance of the asset using a simulation model of the asset (105) based on the virtual replica of the asset (105);
executing the simulation instance of the asset (105) in a simulation environment to generate simulation results;
analyzing the simulation results associated with the execution of the simulation instance of the asset (105); and
predicting an attribute of the asset (105) during run-time based on the analysis of the simulation results.

2. The method according to claim 1, wherein the virtual replica is a virtual model of the asset (105).

3. The method according to claim 1 or 2, wherein the asset (105) is in a pre-production phase.

4. The method according to any one of the preceding claims, wherein predicting the attribute of the asset (105) comprises:
computing an availability of the asset (105) based on the analysis of the simulation results; and
determining whether the availability of the asset (105) is greater than or equal to a threshold availability of the one or more other assets (140) in the same family of the asset (105).

5. The method according to any one of the preceding claims, wherein predicting the attribute of the asset (105) comprises:
determining a behaviour of the asset (105) during run-time based on the analysis of the simulation results; and
determining whether the behaviour of the asset (105) conforms to an expected behaviour of the one or more other assets (140) in the same family of the asset (105) .

6. The method according to any one of the preceding claims, wherein predicting the attribute of the asset(105) comprises:
determining a performance of the asset (105) based on the analysis of the simulation results; and
determining whether the performance of the asset (105) meets a predefined performance rating.

7. The method according to any one of the preceding claims, wherein predicting the attribute of the asset (105) comprises:
predicting a probability of failure of the asset (105) during run-time based on the analysis of the simulation results.

8. The method according to any one of the preceding claims, further comprising:
determining a root cause affecting the attribute of the asset (105);
identifying a design parameter affecting the attribute based on the root cause; and
generating a design of the asset (105) based on identified design parameter.

9. The method according to any one of the preceding claims, further comprising:
monitoring a condition of the asset (105) during run-time using the virtual replica;
identifying abnormalities in the asset (105) based on the monitoring of the condition; and
refining a design of the asset (105) based on the abnormalities identified.

10. The method according to any one of the preceding claims, further comprising:
determining an impact of the attribute of the asset (105) on a facility wherein the asset (105) is installed.

11. The method according to any one of the preceding claims, further comprising:
generating a notification indicating the attribute of the asset (105), on a Graphical User Interface (160).

12. An apparatus (110) comprising:
one or more processing units (150); and
a memory unit (165) communicatively coupled to the one or more processing units, wherein the memory unit (165) comprises one or more modules stored in the form of machine-readable instructions executable by the one or more processing units (150), wherein the one or more modules are configured to perform method steps according to any of the claims 1 to 11.

13. A system (100) comprising:
one or more sources (115, 120, 125) capable of providing asset data associated with an asset (105); and
an apparatus (110) according to claim 11, communicatively coupled to the one or more sources (115, 120, 125), wherein the apparatus (110) is configured to predict an attribute of the asset (105) based on the asset data, according to any of the method claims 1 to 11.

14. A computer-program product having machine-readable instructions stored therein, which when executed by one or more processing units (150), cause the processing units (150) to perform a method according to any of the claims 1 to 11.
